# EUROPEAN PATENT SPECIFICATION

(11) **EP 0 701 513 B1**
(45) Date of publication and mention of the grant of the patent: **26.03.1997**
(21) Application number: 94916392.7
(22) Date of filing: 17.05.1994
(51) Int. Cl.: B60M 1/28, B61D 15/12

(54) **SELF-PROPELLED AUTOMATIC APPARATUS FOR INSTALLING CONTACT LINES**
AUTOMATISCHE SELBSTANGETRIEBENE VORRICHTUNG FUER UEBERHAENGENDE KONTAKTLEITUNGEN
APPAREIL A AUTO-PROPULSION SERVANT A INSTALLER LES LIGNES DE CONTACT EN PORTE-A-FAUX

(30) Priority: 21.05.1993 IT RM930339
(43) Date of publication of application: 20.03.1996
(73) Proprietor: SARTEM S.P.A., I-00145 Roma (IT)
(72) Inventor: DEL PRIORI, Mario, I-00145 Roma (IT); TALLO, Valerio, I-00145 Roma (IT)
(74) Representative: Taliercio, Antonio
(86) International application number: IT9400061
(87) International publication number: WO9427839

(56) References cited:
- EP-A- 0 459 537
- GB-A- 2 260 033
- PATENT ABSTRACTS OF JAPAN vol. 17, no. 304 (M-1427) 10 June 1993 & JP,A,05 024 464 (KURONUMA HIDEO) 2 February 1993

## Description

This invention broadly relates to the general field of manufacturing and maintaining contact lines for railway electric traction and, more specifically, in the frame of a specialized yard for performing such works, it concerns a self-propelled automatic apparatus to carry out the hanger installing work of such lines.

As it is known, the contact lines for railway electric traction comprise one or two bearing cables, generally designated as "messenger cables", on which conductor wires are hanged, generally designated as "contact wires", by means of connection, wire-shaped devices, generally designated as "hangers". The pantograph trolley of the train slides in contact with said contact wires and absorbs therefrom the electric current to supply the traction motors thereof. As further preliminary information, it can be stated that the messenger cables are usually made of copper, but they can also be made of any other material, possibly having a higher mechanical strength, in particular when they are not requested to supply electric current and when they play mainly a support role. As it is easy to understand, in operation they have a catenary shaped geometrical profile.

The contact wires are conventionally made of copper and have a so designated "shaped" cross-section; the "shape" of the contact wires is a noticeable feature of this invention, as it will appear hereinafter. The contact wire should be extended in horizontal trim with very small tolerances, in order to guarantee a continuous and uniform contact with the pantograph trolley.

Due to the fact that the messenger cables and the contact wires extend along different paths, the hangers to be used along the line have different lengths and consequently a hanger having a well defined length corresponds to each position along the line.

The specialized application field for the apparatus according to this invention, therefore, is interested in installing the hangers to be used to connect the contact wires to their support cables, respectively.

It is considered as useful for the comprehension of this description to furnish some information upon the technical state of the art, in order to better disclose the improvements proposed by this invention.

The line trunk to be worked at has usually a length of about 1200 m to 1400 m. When the work to be done is a maintenance work to substitute an already worn section of the line, such work is to be carried out during dwells in the railway traffic, namely intervals usually having a duration of about 2.5 to 3 hours. The contact line to be extended or "stretched" is to be completed and made operative during this time interval such that, upon termination of the railway traffic dwell, the train should be enabled to run through the repaired trunk at full nominal speed and without restrictions of any kind.

GB-A-1 379 791 describes a self-propelled automatic apparatus for hanging contact lines comprising at least one messenger cable and at least one conductor wire, arranged upon a railway car and mounted upon a vertically movable platform, having means to receive the contact lines and to hang them onto hooks mounted upon previously installed poles. It also includes means to detect the positions of the hooks and to drive the hanging means accordingly. All actions are computer controlled.

At the present state of the art, the hanger installing step, so-called "hangering" step, is very expensive because it requires a noticeable resource employment, both from the equipment and from the workmen view point. At present, in particular, when the above indicated times and lengths are to be fulfilled, as an average evaluation, about 10 to 14 workmen and 5 to 7 self-powered railway trucks (power ladders) are to be employed to carry out the hanger installation step along the concerned railway trunk. As a matter of fact, respective sections of the trunk to be equipped are assigned to the above stated workmen, divided into groups comprising two or three workmen for each power ladder, and the hanger installing work is exclusively carried out by manual means. Besides being extremely delicate due to the above mentioned strict tolerance limits to be respected, the work to be done is also very heavy, in view of the fact that the number of hangers to be installed along an average section of the contact line trunk is about 400 units.

The apparatus according to this invention provides for carrying out in a completely automatic manner all hanger installation steps, with a working rate perfectly compatible with the comprehensive working requirements connected with extending or "stretching" a contact line.

A self-propelling apparatus according to this invention works in association with and under control of a computer, operating under instructions deriving from a dedicated computer program, both of which are not part of this invention, such that, for the apparatus to be operative, it is only necessary that it be supplied in the workshop with all hangers needed for installation along the predetermined section of the line to be equipped and that it be brought to a useful position adapted for starting the desired work, that otherwise would require a high number of manual workmen and related power ladder. From a self moving capability view point, the apparatus is mounted upon a self propelling railway truck, adapted to autonomusly move along a railway track made according to conventional railway specification.

Specific subject-matter of this invention therefore, is an automatic apparatus for installing contact lines comprising two conductor wires permanently suspended by hangers from one or from two messenger cables, the apparatus being arranged on a vertically movable platform carried by a railway car provided with two drive control cabs and characterized in that it consists of two symmetrical sections operable in both directions and arranged on said platform to be movable vertically therewith by means of an articulated parallelogram structure, each section including as component parts:
- a device for receiving the conductor wires and for detecting any twist thereof around the longitudinal axis;
- a lower spreading-apart and clamping assembly arranged to spread apart and to maintain in predetermined relative positions the conductor wires as they emerge from the twist detecting device;
- an upper spreading-apart and clamping assembly arranged to receive from the external supply, to spread apart and to maintain in predetermined relative positions to each other and to the conductor wires maintained by the lower clamping assembly the said messenger cables;
- two power-operated magazines arranged for containing the requisite sets of hangers of different lengths suited for use in a contact line installation cycle;
- a cylindrical/cartesian robot having five degrees of freedom and provided with a beam bearing a rotatable cross-arm presenting opposed, symmetrically telescopically extendable arms, with devices being mounted on the distal end of each arm for picking up, positioning and securing hangers of various lengths, said robot being adapted to pick up hangers of the requisite length from said magazines and to install them between said messenger cables and said conductor wires, and
- a computer based system for controlling the railway car to move in one of its two directions at constant speed whilst the robots move in the other direction at the same speed, so that no relative movement occurs between the robots and the contact line, and to control all other steps related to operating the magazines, picking up the hangers from the magazines and installing them.

Further details and advantages of this invention will be evident from the following specification by referring to the enclosed drawings wherein the preferred embodiment is shown by way of illustration and not by way of limitation.

In the drawings:
Figure 1 is an elevation side view of an apparatus according to this invention, mounted upon a railway truck;
Figure 2 is an plan view of the apparatus of Figure 1;
Figure 3 is an elevation side view of the apparatus of this invention, corresponding to Figure 1, but with the hanger magazines removed, in order to make the rearwardly arranged components visible;

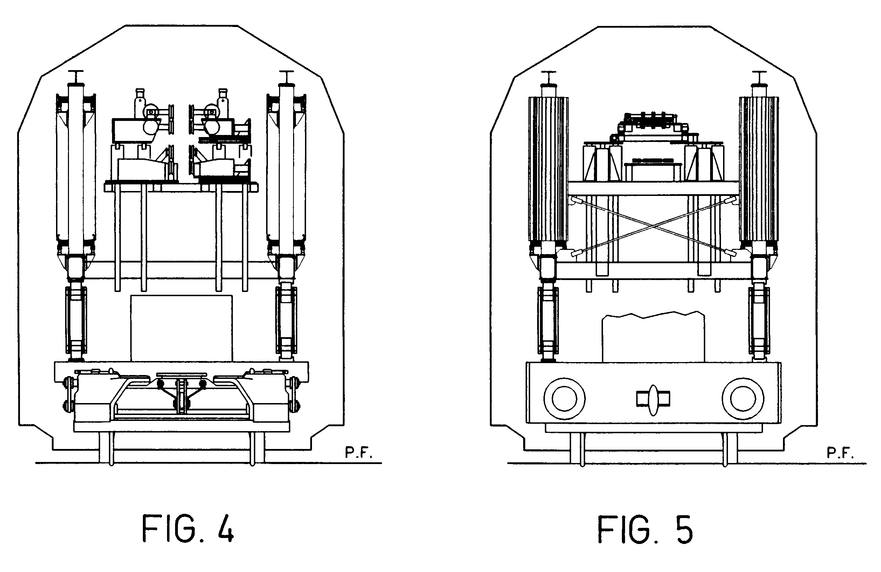

Figure 4 is a cross-section view taken along line A-A of Figure 3;
Figure 5 is a cross-section view taken along line B-B of Figure 3;
Figure 6 is a partial front elevation view showing the arrangement of the apparatus at its upper working level, in the case of two messenger cables and two contact wires;
Figure 7 is a partial front elevation view showing the arrangement of the apparatus at its upper working level, in the case of a single messenger cable and two contact wires.

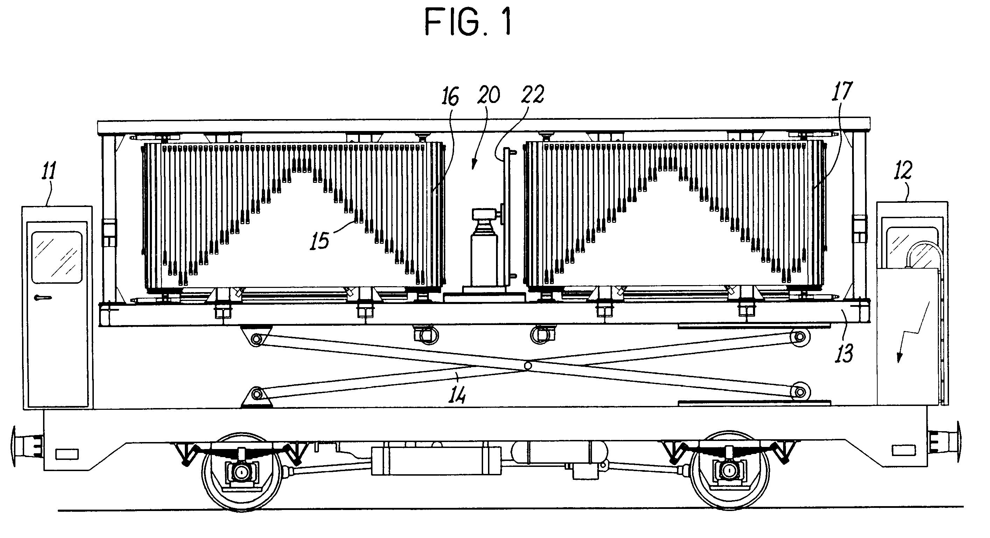

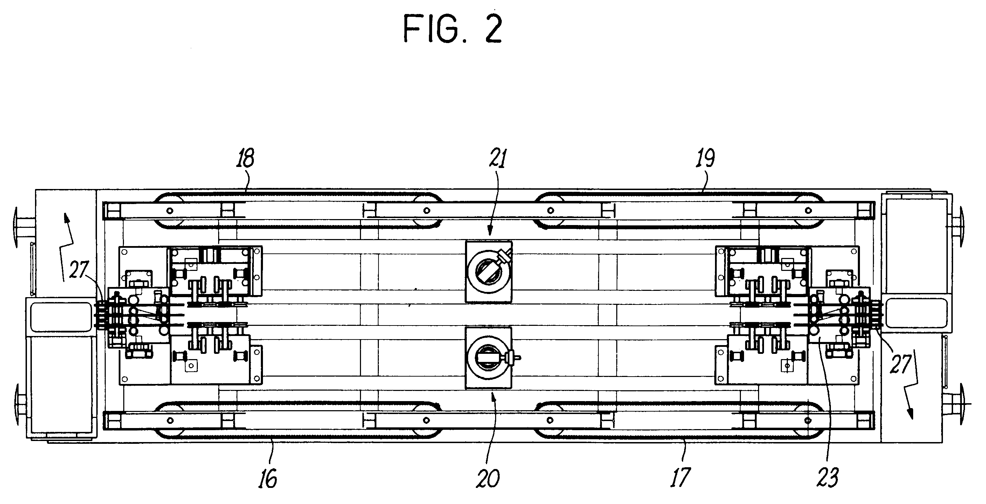

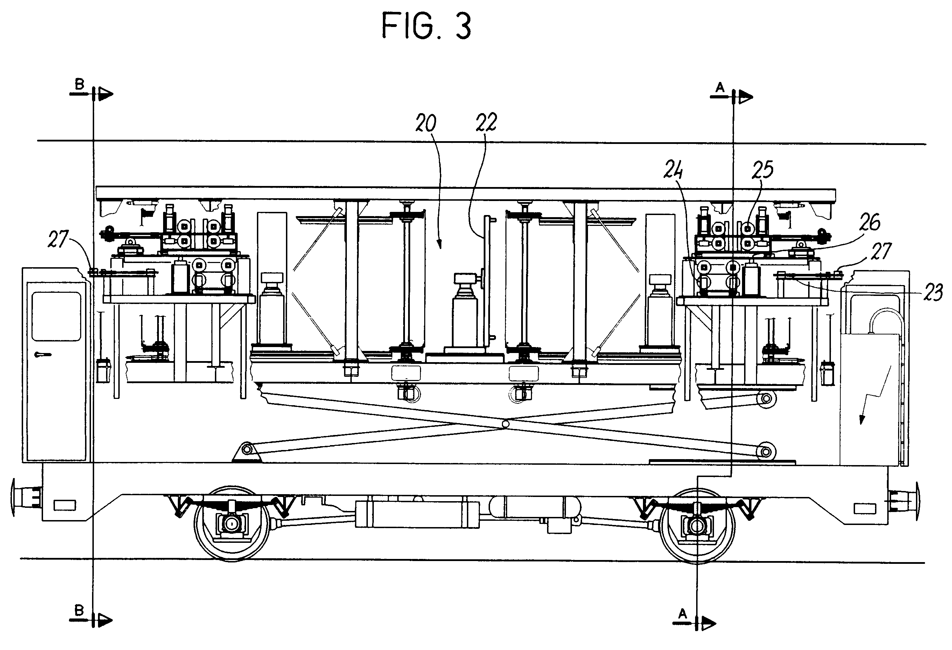

By referring now to the drawings and particularly to Figures 1, 2 and 3, it can be observed that the apparatus according to this invention comprises two symmetrical sections and, since it should be capable to indifferently work in both movement directions, it is mounted upon a railway truck or car 10 provided with two drive and control cabs 11, 12. The apparatus in its whole is arranged upon a platform 13 vertically movable by means of an articulated parallelogram structure (shears) 14, so as to guarantee that it remain always parallel to the ground plane.

Platform 13 is made as a trestle carpentry work, sufficiently rigid to limit any static or dynamic deformations caused by fixed and movable components of the system to very low values.

The necessary hangers 15 are housed in four magazines 16, 17, 18, 19, each of which, as a matter of fact, is formed by two pulleys or toothed wheels around which a belt or chain is extended having the concerned hangers removably suspended therefrom. Further details of said magazines 16 to 19 are not furnished here because such structural particulars can be easily conceived by any person skilled in the art and a number of variations can be made only provided that the functions they have to perform are understood.

To this purpose, it is important to explain that the positions the individual hangers have to take within the magazines are strategically arranged, in view of the fact that a biunivocal correspondence exists between each individual point along the line and the hanger which in that position is to be employed to hang the contact wire on the overhanging catenary-shaped messenger cable. The hangers are arranged, therefore, according to a logic and strictly defined succession, so as to be successively picked up and installed.

The installation of the hangers per se is carried out by means of a suitable automatic mechanical apparatus (robot) which will be broadly described herein below and some structural particulars of which are subject-matter of a separate patent application.

Magazines 16 to 19 are individually powered, for instance by means of asynchronous motor-reducer assemblies driven by inverters and equipped with encoders, connected to a central common control computer system acting under instruction deriving from a suitable software, both of which are not part of this invention. The control system, anyway, should be capable to detect the individual positions and to control the movements of the individual magazines, as well as the movements of any other component of the apparatus, with millimetric accuracy, in view of the extremely strict allowable tolerances.

Even if such work can be made by manually operating workmen, as above mentioned, two robots 20, 21 are mounted upon said platform 13, such robots being the most suitable apparatus to automatically perform the picking up operations of the hangers 15 from their respective magazines 16 to 19 and their installation between the messenger cables and the contact wire. The robots are equipped with prehensile members comprising telescopic, bidirectionally symmetrically extendible cross-arms 22, driven for instance by means of a motor-reducer assembly, conveniently by means of a screw/nut-screw pair with right-hand/left-hand thread. Cross-arm 22 is mounted at the end of a beam portion of the robot by means of a centrally located, circonferential clamping device (not shown). The robots have five degrees of freedom (three translation movements, a rotation movement around its vertical axis, an angular movement of its head bearing the cross-arm 22). In addition to this degrees of freedom of the robot, a further degree of freedom can be added, strictly connected to the above described cross-arm per se, namely its telescopic extension movement.

Of course, cross-arm 22 has geometrically variable overall dimensions so as to exhibit reduced dimensions during installation operations involving short hangers, in order that the overall external dimensions of the whole apparatus be smaller than the rolling stock clearance gauge. To this effect, for instance, a motor-reducer assembly of asynchronous type with control inverter and associated open ring encoder of well known kind can be adopted.

From a structural point of view, the above explained cross-arms 22 have prehensile, pneumatically operated devices (not shown) mounted at their ends, adapted to pick up with accurate precision the hangers from the magazines. Furthermore, each cross-arm 22 has, fixedly mounted at its ends, two pneumatically operated screwers designed to be used after having inserted the clamps of the hangers, for locking the fastening bolts of the hangers themselves, as those skilled in the art will easily understand.

As important components of the cross-arms, sensors are provided to detect and check the relative positions between the conductor or contact wire and its supporting messenger cable, in order to millimetrically control the position of the attachment points of the hangers, as well as the positions of clamping devices equipped with rolling members which grasp both the conductor or contact wire and the messenger cable and, upon terminating the installation operation of a hanger, open themselves to start the installation cycle of the subsequent hanger.

Spreader assemblies comprising rollers or pulleys 23 are provided on platform 13 at the working ends of robots 20, 21. Since the conductor wires or the messenger cables are dispensed from an external supply not included in the apparatus of the present invention and since they are dispensed generally in coupled form and anyway in uncertain position, the main role of said spreader assemblies is, in the first place, to spread apart the concerned wires (conductor wire and messenger cable), thereby preventing them from folding and, in the second place, by cooperating with lower and upper clamping assemblies arranged downwardly therefrom, to bring the contact wires and the messenger cables to stable and certain positions.

The above set forth lower and upper clamping assemblies 24, 25 comprise at least two pulley pairs which grasp the wire or the cable in order to clamp them in stable and certain position, so as to prevent them from displacing with respect to the laying axis, in preparation to installing the respective hangers in the desired positions. During work, the so hanged and clamped contact wire is of course stretched along its axis. The stretching level cannot be higher than a pre-established limit value, but it should anyway be such that the unavoidable camber is reduced to a so low value, for instance only two or three millimetres, as to be amenable to be subsequently eliminated by movable clamping members mounted on the cross-arms 22 of robots 20, 21.

It should be noted that the lower and upper clamping assemblies 24 and 25, at both sides of platform 13, should be adapted to be opened in order to enable the clamps of the hangers to pass there through. In fact, should it be not so, since such clamps have overall dimensions greater than the dimensions of the wire or cable, they could not pass through the race of the pulleys. Opening of the grasping assemblies is effectively made possible by manufacturing the pulleys as two separable or spreadable apart half pulleys. To this purpose, it is to be specified that, as above mentioned, each lower and upper clamping assembly should comprise at least two pulley pairs in order that, when the pulleys of a first pair are spread apart to enable the clamp of a hanger to pass there through, the pulleys of the second part are kept closed in order to anyway maintain the wire in stable position along the laying axis. In this operation way, the pulley pairs are alternatively opened and closed in the installation movement direction during the passage of each hanger.

Since the messenger cables are not extended in straight horizontal line, but they follow a catenary shaped curve, the upper clamping assemblies, differently with respect to the lower ones, are mounted upon hydraulically vertically movable platforms 26, operated by the already mentioned central common computer control system, for instance, by means of analogue potentiometers which are incorporated with the drive assembly and furnish feedback signals corresponding to the real height position of the cable. As a matter of fact, upon comparing the real vertical position of the hanger to the nominal position thereof, platforms 26 are moved hydraulically or with any other operation mechanism in order to bring the difference to zero value. In this manner, the system in effect divides the catenary shaped geometrical profile of the messenger cables into a stepped broken line, wherein each step corresponds to a single hanger section of the line.

A further important component of the apparatus according to this invention is a device designed to detect a twisted condition in the contact wire. Since, in contrast to the messenger cables, the contact wires are specifically shaped in order to optimise the contact with the pantograph trolley, it is apparent that twists of the contact wires greater than a maximum tolerance are not permissible. Aiming at detecting the twists of the contact wires with respect to their longitudinal axis, two twist detection and possibly correction devices 27 are provided at both inlet sides of the apparatus, for operation in both movement directions, namely at both ends of the platform, that is to say immediately before or upstream of the hanger installing point.

Said twist detecting devices 27 comprise shaped pulleys the outline of which inversely duplicates the shape of the contact wire and they are mounted upon base structures adapted to rotate around their own longitudinal axis when transversal twists are present in the wire with values higher than the preload of return springs. Said preloaded condition of the springs is per se capable to correct small twists of the contact wire. When the limit value is overcome, the resulting condition will be considered from any view point as an error condition and, as such, it will result into stopping the operation of the apparatus and requiring the intervention of a workman to manually correct the error.

### OPERATION

The railway truck equipped as above explained will be moved by an autonomous propulsion assembly which causes it to run along the railway track at a rigorously constant velocity strictly matched to the longitudinal velocity of the robots mounted thereupon.

The longitudinal positions of the hangers can be derived from the well known hanger installation tables preliminary included in the memory of the management computer, so that a determined hanger will be associated with each hanger installation position.

The hanger installation operation will be carried out while the railway truck is moving and while also the robots are moving, but in opposite direction with respect to the truck, the movements of the truck and of the robots are rigorously performed at the same velocity, so that the truck and the robots have a relative velocity rigorously null, or in other words the are perfectly stationary with respect to the messenger cable/contact wire system.

The robot, upon completing the installation operation of a hanger, will immediately return to a central position on the platform, in order to be supplied with a new hanger or, more precisely, with the subsequent hanger, which is uniquely determined. Such a hanger, in fact, is the one already present in strategic position, because it is located and moved in "shadow" time by the computer system.

The start of the so-called span count is determined by an optical sensor which will locate a suitable position 0 corresponding to time 0, wherefrom all movements of the system will be started, under clock control deriving from the hanger installation tables already preliminary stored therein.

The operation by which a hanger 15 is inserted between the conductor wire and the associated messenger cable is made possible by exploiting the five degrees of freedom of the robot plus the additional degree of freedom connected with the cross arm. Screwing of the hanger clamps is effected by means of pneumatic screwers suitably oriented and mounted at the ends of the cross arm. Upon tightening the clamps, the robots withdraw their beams and, after having opened the movable clamping assemblies arranged on the cross-arms, they quickly return back to the pick up position for picking up the subsequent hanger. The robots operate one in front of the other and each of them operates upon one hanger of each hanger pair, respectively.

The two robots are independent on one another and, therefore, it is possible to work with one only robot of a pair, should one of them be inoperative. In this case, the hangers that are not installed by an inoperative robot should be installed by the conventional manual procedure.

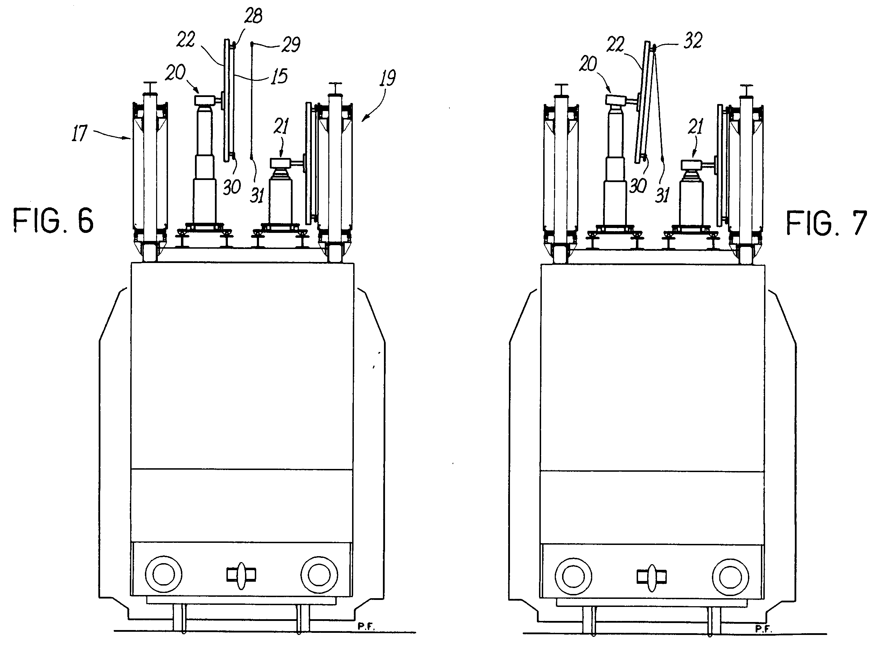

The condition of the apparatus operating at its working level along a line comprising two messenger cables 28 and 29 with two conductor wires 30 and 31 is shown in Figure 6, wherein robot 20 is illustrated during the installation of a hanger, while robot 21 is illustrated during the picking up operation of a subsequent hanger from the associated magazine. Figure 7 shows a working condition of the apparatus at its upper level along a line comprising a single messenger cable 32 and two conductor wires 30, 31. In this case, it should be remarked that the cross-arm 22 is tilted in order to accommodate the angular deviation between messenger cable 22 hangers 30 and 31, alternatively arranged at either side thereof.

## Claims

1. A self-propelled automatic apparatus for installing contact lines comprising two conductor wires (30,31) permanently suspended by hangers from one or from two messenger cables (28,29; 32), the apparatus being arranged on a vertically movable platform (13) carried by a railway car provided with two drive control cabs and
characterized in that
it consists of two symmetrical sections operable in both directions and arranged on said platform (13) to be movable vertically therewith by means of an articulated parallelogram structure (14), each section including as component parts:
- a device (27) for receiving the conductor wires (30,31) and for detecting any twist thereof around the longitudinal axis
- a lower spreading-apart and clamping assembly (23) arranged to spread apart and to maintain in predetermined relative positions the conductor wires (30,31) as they emerge from the twist detecting device (27);
- an upper spreading-apart and clamping assembly (25) arranged to receive from the external supply, to spread apart and to maintain in predetermined relative positions to each other and to the conductor wires maintained by the lower clamping assembly the said messenger cables (28,29);
- two power-operated magazines (16,18; 17,19) arranged for containing the requisite sets of hangers of different lengths suited for use in a contact line installation cycle;
- a cylindrical/cartesian robot (20,21) having five degrees of freedom and provided with a beam bearing a rotatable cross arm (22) presenting opposed, symmetrically telescopically extendable arms, with devices being mounted on the distal end of each arm for picking up, positioning and securing hangers of various lengths, said robot being adapted to pick up hangers of the requisite length from said magazines (16,18; 17;19) and to install them between said messenger cables (28,29; 32) and said conductor wires (30,31), and
- a computer based system for controlling the railway car to move in one of its two directions at constant speed whilst the robots move in the other direction at the same speed, so that no relative movement occurs between the robots and the contact line, and to control all other steps related to operating the magazines, picking up the hangers from the magazines and installing them.

2. A self-propelled automatic apparatus for installing hangers contact lines according to claim 1, characterized in that said device (27) for detecting any twist in said conductor wires (30,31) comprise shaped pulleys the outline of which inversely duplicates the shape of the contact wire and they are mounted upon base structures adapted to rotate upon their longitudinal axis when a transversal twist is present in the wire, in contrast with the force of preloaded return springs.

3. A self-propelled automatic apparatus for installing hangers on contact lines according to claim 2, characterized in that the preload grade of said return springs is sufficient to correct any small twists of the contact wire.

4. A self-propelled automatic apparatus for installing hangers on contact lines according to claim 2, characterized in that the rotation of the base structures bearing said pulleys is defined by two limit positions that establish the maximum tolerance levels of the contact wire twists beyond which the apparatus provides for stopping the operation and for commanding the corrective manual intervention of a workman.

5. A self-propelled automatic apparatus for installing hangers on contact lines according to claim 1, characterized in that said lower spreading apart and clamping assembly (23) comprises a set of horizontal axis pulleys for spreading apart purposes and a set of vertical axis pulley pairs for clamping in position said conductor wires (30, 31).

6. A self-propelled automatic apparatus for installing hangers on contact lines according to claim 5, characterized in that at least two pulley pairs are provided for clamping in position said conductor wires (30, 31) and the pulleys of each pair can be alternatively opened in order to enable the lower clamp of the hanger to pass there through, after it is fastened to the respective conductor wire.

7. A self-propelled automatic apparatus for installing hangers on contact lines according to claim 1, characterized in that said upper spreading apart and grasping assembly (25) comprises a set of horizontal axis pulleys for spreading apart purposes and a set of vertical axis pulley pairs for clamping in position said messenger cable(s) (28, 29; 32).

8. A self-propelled automatic apparatus for installing hangers on contact lines according to claim 7, characterized in that at least two pulley pairs are provided to clamp in position said messenger cables (28, 29; 32) and the pulley of each pair can be alternatively opened in order to enable the hanger to pass therethrough after it is fastened to the respective messenger cable.

9. A self-propelled automatic apparatus for installing hangers on contact lines according to claim 7 and 8, characterized in that said upper spreading apart and clamping assemblies (25) are arranged upon hydraulically operated vertically movable base structures (26) controlled in such a manner as to follow the catenary shaped profile of the messenger cables.

10. A self-propelled automatic apparatus for installing hangers on contact lines according to claim 1, characterized in that each of said magazines (16, 17, 18, 19) comprises two pulleys or toothed wheels around which a continuous belt or chain is extended such that the hangers may be removably suspended therefrom.

11. A self-propelled automatic apparatus for installing hangers on contact lines according to claim 10, characterized in that the hangers stored in said magazines have heights strictly corresponding to their installation positions along the catenary shaped messenger cables according to a pre-established hanger installation table and in addition the hangers are correspondingly successively arranged within the magazines so as to be successively picked up by said robots.

12. A self-propelled automatic apparatus for installing hangers on contact lines according to claim 1, characterized in that an optical sensor is provided to locate the null or zero position of the line trunk along which the hangers have to be installed and to start the operation of the whole apparatus.

## Patentansprüche

1. Selbstangetriebene automatische Vorrichtung zur Verlegung von Kontaktleitungen, mit zwei ständig durch Hängerklemmen von einem oder zwei Tragkabeln (28,29,32) aufgehängten Leitungen (30,31), wobei die Vorrichtung auf einer senkrecht verstellbaren Plattform angeordnet ist, die durch eine mit zwei Steuerkabeln versehenes Schienenfahrzeug getragen ist, dadurch gekennzeichnet, dass sie aus zwei symmetrischen in beiden Richtungen bewegbaren und auf der vorgenannten Plattform (13) angeordneten Abschnitten besteht, die zusammen mit derselben durch eine Gelenkparallelogramm-Struktur (14) senkrecht verstellbar its, wobei jeder Abschnitt folgende Bestandteile umfasst:
- eine Einrichtung zur Aufnahme der Leitungen (30,31) und zur Erfassung einer jeden Verdrehung derselben um die Längsachse;
- eine untere Entspann- und Spannanordnung (23) zum Aufweiten und zum Aufrechterhalten der Leitungen (30,31) in bestimmten Stellungen zueinander bei deren Auftauchen von der Anzeigevorrichtung (27) zum Anzeigen der Verdrehung;
- eine obere Entspann- und Spannanordnung (25), die von Aussen versogt wird, zum Aufweiten und zum Aufrechterhalten der Tragkabel (28,29) in bestimmten Stellungen zueinander und zu den im unteren Spannanordnung gehaltenen Leitungen;
- zwei kraftangetriebene Lager (16,18; 17,19), die die notwendigigen Serien von Hängerklemmen verschiedener Länge enthalten, von die für die Anwendung in einen Verlegungspiel von von Kontaktleitungen angebracht sind;
- ein zylindrischer Cartesian-Robot (20,21) mit fünf Freiheitsgraden, mit einem einen Querarm (22) tragenden Balken, wobei der Querarm gegenüber stehende symmetrisch teleskoparting verlängbare Armteile aufweist, wobei am äusseren Ende eines jeden Armteiles Einrichtungen zum Erfassung, Anordnung und Befestigung der Hängerklemmen verschiedener Länge vorgesehen sind, und wobei der vorgenannte Robot die Hängerklemmen gewünschter Länge von den vorgenannten Lagern (16,18; 17,19) zu erfassen, und zwischen den vorgenannten Tragkabeln (28,29,32) und den vorgenannten Leitungen (30,31) zu verlegen vermag, und
- ein Computer-System zur Steuerung des Schienenfahrzeuges in beiden Richtungen mit konstanter Geschwindigkeit, während der Robot sich in der entgegengesetzten Richtung mit gleicher Geschwindigkeit bewegt, so dass zwischen dem Robot und der Kontaktleitung keine Verschiebung stattfindet, und zur Steuerung aller anderen zur Betätigung der Lager, zur Erfassung und Entnehmung der Hängerklemmen aus diesem Lagern und zur Verlegung derselben dienenden Arbeitsschritte.

2. Selbstangetriebene automatische Vorrichtung zur Verlegung von Kontaktleitungen nach Anspruch 1, dadurch gekennzeichnet, dass die genannte Einrichtung zur Erfassung einer jeden Verdrehung der genannten Leitungen (30,31) geformte Scheiben enthält, deren Aussenlinie die Form der Kontaktleitung im umgekehrten Verhältnis verdoppelt, wobei diese Sheiben auf den Grundstrukturen angeordnet sind, die sich um deren Längsachse gegen die Kraft von vorgespannten Rückzugfedern zu drehen vermögen, wenn eine Querverdrehung der Leitung stattfindet.

3. Selbstangetriebene automatische Vorrichtung zur Verlegung von Kontaktleitungen nach Anspruch 2, dadurch gekennzeichnet dass die Verspannungskraft der genannten Rückzugfelder für die Berichtigung einer jeden Verdrehung der Kontaktleitung genügend ist.

4. Selbstangetriebene automatische Vorrichtung zur Verlegung von Kontaktleitungen nach Anspruch 2, dadurch gekennzeichnet, dass die Drehung der die Scheiben tragenden Grundstrukturen durch zwei Grenzlagen bestimmt ist, die die Höchstwerte der Verdrehung der Kontaktleitungen festsetzen, oberhalb welcher die Vorrichtung die Arbeitsstufe unterbindet und einen Handeingriff eines Bedienungsmans verlangt.

5. Selbstangetriebene automatische Vorrichtung zur Verlegung von Kontaktleitungen nach Anspruch 1, dadurch gekennzeichnet, dass die untere Entspann- und Spannanordnung (23) eine Reihe von waagerechten Entspann-Scheiben, und eine Reihe von senkrechten Scheiben zum festlegen der vorgenannten Leitungen (30,31) enthält.

6. Selbstangetriebene automatische Vorrichtung zur Verlegung von Kontaktleitungen nach Anspruch 5, dadurch gekennzeichnet, dass mindestens zwei Scheibenpaare zum Festlegen der vorgenannten Leitungen (30,31) vorgesehen sind und die Scheiben eines jeden Paars wechselweise geöffnet werden können, um die untere Klemme der Hängerklemmen, nach seiner Befestigung an die zugeordnete Leitung, durch dieselben durchführen zu lassen.

7. Selbstangetriebene automatische Vorrichtung zur Verlegung von Kontaktleitungen nach Anspruch 1, dadurch gekennzeichnet, dass die obere Entspann- und Spannanordnung (25) eine Reihe von Scheiben mit waagerechter Achse für Aufweitungszwecke und eine reihe von Scheiben mit senkrechter Achse zur Festlegung der vorgenannten Tragkabel (28,29; 32) enthält.

8. Selbstangetriebene automatische Vorrichtung zur Verlegung von Kontaktleitungen nach Anspruch 7, dadurch gekennzeichnet, dass mindestens zwei Scheibenpaare zur Festlegung der vorgenannten Tragkabel (28,29; 32) vorgesehen sind und dass die Scheibe eines jeden Scheibenpaars wechselweise geöffnet werden kann, um die Klemme durch dieselbe durchführen zu lassen, nachdem sie an das zugeordnete Tragkabel befestigt wurde.

9. Selbstangetriebene automatische Vorrichtung zur Verlegung von Kontaktleitungen nach Ansprüche 7 und 8, dadurch gekennzeichnet, dass die vorgenannten oberen Entspann- und Spannanordnungen (25) auf den hydraulisch betätigbaren und senkrecht bewegbaren Grundstrukturen (25) angeordnet sind, die so gesteuert sind, dass sie das kettenlinieförmige Profil der Tragkabel folgen können.

10. Selbstangetriebene automatische Vorrichtung zur Verlegung von Kontaktleitungen nach Anspruch 1, dadurch gekennzeichnet, dass jedes der vorgenannten Lager (16,17,18,19) zwei Scheiben oder Zahnräder umfasst, um welche sich einendlose Riemen oder endlose Kette erstrecken, so dass die Hängerklemmen an denen abnehmbar angehängt werden können.

11. Selbstangetriebene automatische Vorrichtung zur Verlegung von Kontaktleitungen nach Anspruch 10, dadurch gekennzeichnet, dass die in den vorgenannten Lagern aufbewahrten Hängerklemmen eine deren Verlegestellung längst der kettenlinieförmigen Tragkabel entsprechende Höhe gemäss einer vorbestimmten Verlegetafel der Hängerklemmen haben und ausserdem die Hängerklemmen in einer entsprechenden Reihenfolge innerhalb der Lager so angeordnet sind, dass sie seitens des vorgenannten Robots aufeinanderfolgend entnommen werden können.

12. Selbstangetrieben automatische Vorrichtung zur Verlegung von Kontaktleitungen nach Anspruch 1, dadurch gekennzeichnet ein optischer Fühler vorgesehen ist, der die Null- oder Zerolage der Leitungsstrecke, längst welcher die Hängerklemmer verlegt werden sollen, anzeigt und die Ansteuerung der ganzen Vorrichtung gestattet.

## Revendications

1. Appareil à autopropulsion pour installer les lignes de contact, comprenant deux fils conducteurs (30, 31) suspendus d'une façon permanente par pendules d'un ou deux câbles porteurs (28, 29;32), l'appareil étant placé sur une plate-forme (13) déplaceable en direction verticale et supportée par un véhicule des chemins de fer, pourvu de deux cable de commande et caractérisé en ce que il consiste de deux sections actionnable en deux directions et placées sur ladite plate-forme (13) de façon à étre mobile avec elle en direction vertical au moyen d'une structure à parallelogramme articuleée (14), chaque section comprenant comme parties composantes:
- un dispositif (27) pour recevoir les fils conducteurs (30, 31) et pour détecter toutes les torsions desdits fils autour leur axe longitudinale;
- un ensemble d'écartement et de serrage inférieur (23) pour écarter et maintenir dans relatives positions prédéterminées les fils conducteur (30, 31) à mesure qu'ils sortent du dispositif détecteur des torsions (27);
- un ensemble d'écartement et de serrage supérieur (25) pour recevoir de l'alimentation éxtérieure, pour écarter et pour maintenir dans relatives positions prédéterminées entre eux et par rapport aux fils conducteurs, maintenus par l'ensemble de serrage inférieur, lesdits câbles porteurs (28, 29);
- deux magasins actionnés (16,18; 17, 19) pour contenir les séries désires des pendules de longeur différent aptes à être utilisés pour le cycle d'installation des lignes de contact;
- un robot cylindrique-cartésien (20, 21) ayant cinq degrés de liberté et pourvu d'une poutrelle portant un bras transversal pivotant, ayant des bras opposés extensible de façon symétrique at télescopique, avec de dispositifs qui sont montés au bout distal du charque bras pour saisir, positionner et fixer les pendules des longeurs differentes, ledit robot étant apte à saisir les pendules de longeur désisé desdits magasins (16, 18; 17, 19) et installer les mêmes entre lesdits câbles porteurs et les dits fils conducteur (30, 31) et
- un system à computeur pour contrôler le véhicule de chemins de fer dans ses déplacements en leur directions à vitesse constante, tendis que le robot se bouge en autre direction à la même vitesse, de façon que entre le robot et le fils de contact il n'a pas lieu un movement relatif entre le robot et la ligne de contact et pour contrôler toutes les autres phases relatives à l'actionnement des magasins, au prélèvament des pendules des magasin et à leur installation.

2. Appareil à autopropulsion pour installer les lignes de contact selon la revendication 1, caractérise en ce que ledit dispositif (27) pour détecter toute les torsions desdits fils conducteur (30, 31) comprend de poulies façonnées, le contour desquelles redouble inversement la forme de la ligne de contact et lesquelles sont montées sur les structures de base aptes à tourner autour leur axes longitudinals quand une torsion transversal se présente dans le fil, in opposition à les forces de ressorts de rappel prétendus.

3. Appareil à autopropulsion pour installer les lignes de contact selon la revendication 2, caractérisé en ce que le degré de prétension desdits ressorts de rappel est souffisant pour corriger toutes les faibles torsions de la ligne de contact.

4. Appareil à autopropulsion pour installer les lignes de contact selon la revendication 2, caractérisé en ce que la rotation des structures de base portantes lesdites poules est défini par deux positions limites, qui établient les niveaux de solérance maximum de la torsion de la ligne de contact, au-delá de laquelle l'appareil arrête l'operation et commande l'intervention manuele d'un opérateur.

5. Appareil à autopropulsion pour installer les lignes de contact selon la revendication 1, caractérisé en ce que ledit ensemble d'écartement et de serrage inférieur (23) comprend une série des poules à axe horizontal pour l'écartement et une série des poulies à axe vertical pour le serrage en positions desdits fils conducteur (30, 31).

6. Appareil à autopropulsion pour installer les lignes de contact selon la revendication 5, caracterisé en ce qu'au moins des couples de poulies sont prévues pour serrer en position lesdits fils conducteur (30, 31) et les poules de chaque couple peuvent être ouvertes alternativement pour laisser passer le pendule à travers elle, aprés est éte fixé au respectif fil conducteur.

7. Appareil à autopropulsion pour installer les lignes de contact selon la revendication 1, caractérisé en ce que ledit ensemble d'écartement et de serrage supérieur (25) comprend une série des poulies à axe horizontal pour l'écartement et une série des poulies à axe vertical pour le serrage en position du câble ou des câbles porteur respectifs.

8. Appareil à autopropulsion pour installer les lignes de contact selon la revendication 7, caractérisé en ce qu'au moins deux couples des poulies sont prévues pour serrer en position lesdits câbles porteur (28, 29; 32) et la poulie de chaque couple peut être ouverte alterativement pour laissu passer le pendule à travers la même, après qu'il été fixé au respectif câble porteur.

9. Appareil à autopropulsion pour installer les lignes de contact selon la revendication 7 ou 9, caractérisé en ce que lesdits ensemble d'écartement et de serrage supérieurs (25) sont placés sur les structure de base (26) actionnées hydrauliquement et déplaceable verticallement, qui sont controllées de façon à suivre le profil de form caténaire du cable porteurs.

10. Appareil à autopropulsion pour installer les lignes de contact selon la revendication 1, caractérisé en ce que chacun desdits magasins (16, 17, 18, 19) comprend deux poulies ou zones dentées, autour, desquelles s'étendent les courroies ou chaînes sans fin, de façon que le pendules peuvent être suspendus de manière à pouvoir être enlevés.

11. Appareil à autopropulsion pour installer les lignes de contact selon la revendication 10, caractérisé en ce que les pendules placés dans lesdits magasins ont l'hauteur correspondente exactement à leur position d'installation la long des câbles porteur à ligne caténaire selon un tableau d'installation des pendules préestablis et en outre les pendules son successivement placés en manière correspondante dans les magasins pour pouvoir être successivement prélevés par lesdits robots.

12. Appareil à autopropulsion pour installer les lignes de contact selon la revendication 1, caractérisé en ce que un détecteur optique est prévu pour indiquer la positionnule ou zéro du tronc de la ligne, le long duquel les pendules doivent être installés et pour démarrer l'operation de l'entier appareil.
